**Europäisches Patentamt**

**European Patent Office**

**Office européen des brevets**

(19)

(11) Publication number: **0 067 879**

**A1**

(12)

# EUROPEAN PATENT APPLICATION

published in accordance with Art. 158(3) EPC

(21) Application number: **82900039.7**

(22) Date of filing: **16.12.81**

Data of the international application taken as a basis:

(86) International application number:
**PCT/JP81/00380**

(87) International publication number:
**WO82/02260 (08.07.82 82/17)**

(51) Int. Cl.³: **G 05 B 19/403**

---

(30) Priority: **26.12.80 JP 188928/80**

(43) Date of publication of application:
**29.12.82 Bulletin 82/52**

(84) Designated Contracting States:
**CH DE FR GB LI**

(71) Applicant: **Fanuc Ltd**
**5-1, Asahigaoka, 3-chome**
**Hino-shi, Tokyo 191(JP)**

(72) Inventor: **NOZAWA, Ryoichiro**
**12-1-2105, Sarugaku-cho Shibuya-ku**
**Tokyo 150(JP)**

(72) Inventor: **KAWAMURA, Hideaki**
**1375-5, Narahara-cho Hachioji-shi**
**Tokyo 193(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

---

(54) NUMERICALLY CONTROLLED MACHINING SYSTEM.

(57) A numerically controlled machining system, which enables rough machining using command data for finishing. A clamping means clamps a pre-designated driving shaft onto clamp-coordinates. When executing the finishing command data recorded in a numerical information-recording medium if the driving axis exceeds the previous set clamp coordinates this driving axis is clamped by those coordinates. The clamp-coordinates are changed sequentially by a clamp-coordinates-changing means, so that many ways of rough machining can be performed by use of the command data for finishing.

./...

EP 0 067 879 A1

FIG. 1

- 1 -

S P E C I F I C A T I O N

NUMERICAL-CONTROLLED MACHINING SYSTEM

TECHNOLOGICAL FIELD

The present invention relates to a numerical-controlled machining system which permits rough machining through utilization of finishing command data.

TECHNOLOGICAL BACKGROUND

Numerical-controlled machining is advantageous in that it permits high precision machining without a skilled worker, but it is disadvantageous in that the preparation of command data therefor requires much time and some experience. For instance, in the case of rough machining of a square-shaped raw material, it is necessary in the prior art to prepare several kinds of data for rough machining and to rough the raw material to a shape close to a finishing shape by executing the data in a sequential order; namely, the prior art involves troublesome preparating of several kinds of command data.

DISCLOSURE OF THE INVENTION

The present invention is intended to overcome such a defect of the prior art and has for its object to make it possible to perform rough machining through utilization of data on at least a machining route in finishing command data, thereby making unnecessary the preparation of command data for rough machining. Briefly stated, the present invention is provided with clamp means for clamping a predesignated drive shaft at a clamp coordinate value when the drive shaft is to exceed the clamp
coordinate value in the case of executing finishing command
data stored on a numerical information storage medium, The
clamp coordinate value is modified by clamp coordinate value
modifying means, for instance, upon each completion of rough
machining, and a number of rough machining operations are carried
out using one finishing command data. Since preparation of
rough machining command data can be omitted, maneuverability of
the numerical controller can be enhanced markedly.

BRIEF DESCRIPTION OF THE DRAWINGS

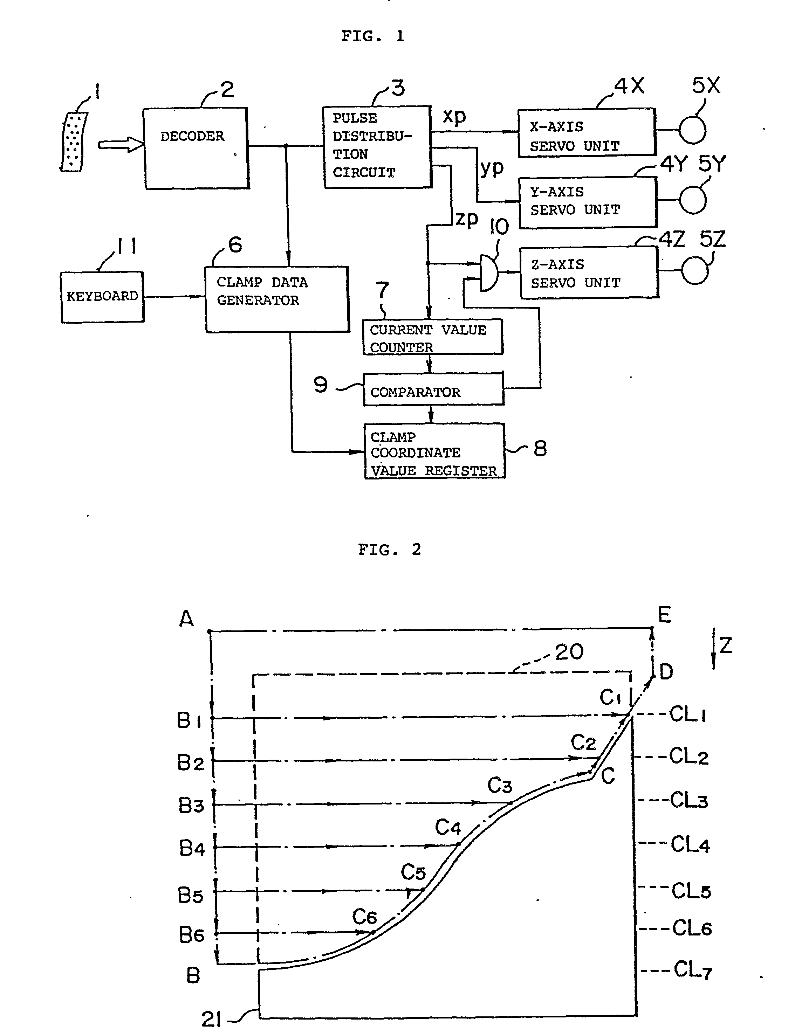

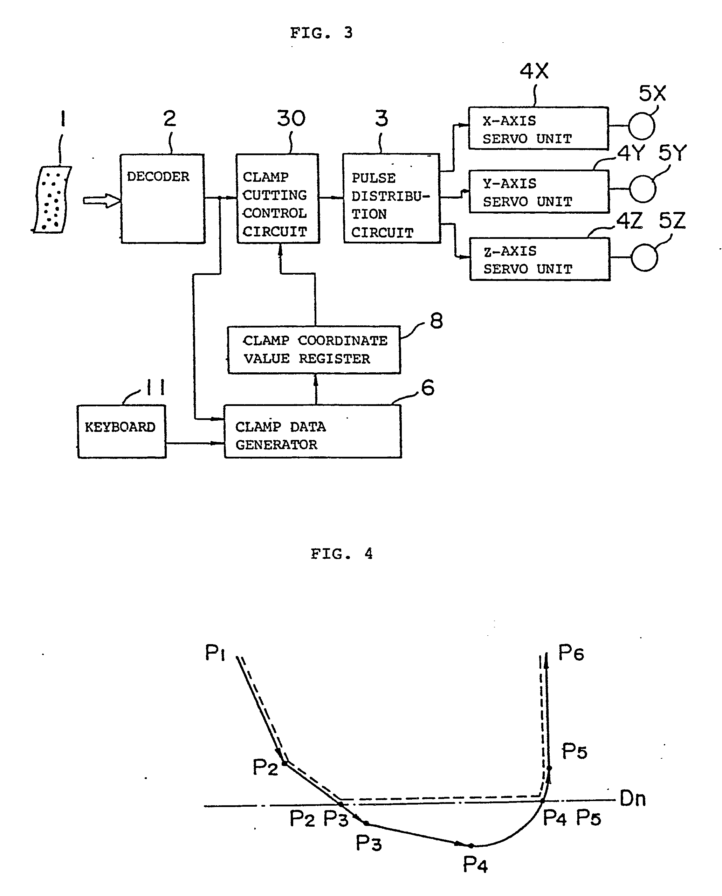

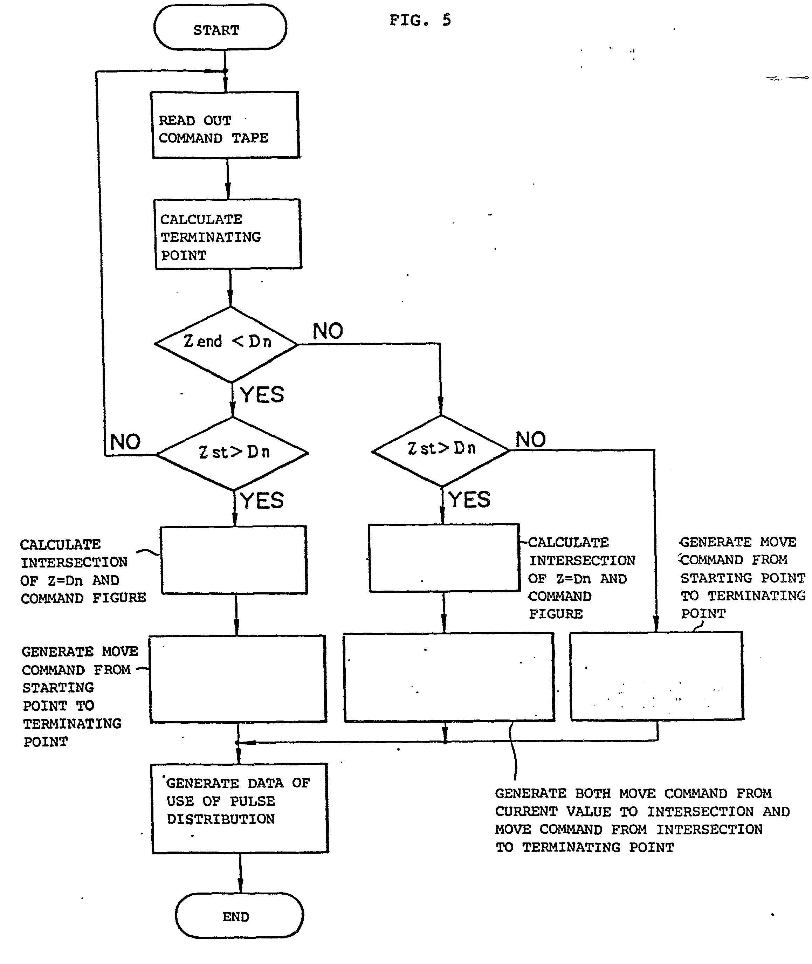

Fig. 1 is a block diagram illustrating the principal
part of an example of a numerical controller embodying this
invention system; Fig. 2 is a diagram explanatory of its
operation; Fig. 3 is a block diagram illustrating the principal
part of another example of the numerical controller embodying
this invention system; and Figs. 4 and 5 are diagrams explanatory
of their operation.

PREFERRED EMBODIMENTS OF THE INVENTION

Fig. 1 is a block diagram illustrating the principal
part of an example of a numerical controller embodying the
system of the present invention. Reference numeral 1 indicates
a numerical information storage medium, for instance, a command
tape, 2 a decoder, 3 a pulse distribution circuit, 4X, 4Y and
4Z X-axis, Y-axis and Z-axis servo units, 5X, 5Y and 5Z X-axis,
Y-axis and Z-axis motors, 6 a clamp data generator, 7 a current value counter, 8 a clamp coordinate value register, 9 a
comparator, 10 a gate circuit, and 11 a keyboard.

For example, in the case of sequentially roughing a cubic-
shaped raw material 20 to finally obtain a product 21 of such a
shape as indicated by the solid line  in Fig. 2, finishing
command data designating a finish machining route indicated by
A → B → C → D → E → A in Fig. 2 is stored on the command tape 1.
The command tape 1 is decoded by the decoder 2 and data for pulse
distribution are provided to the pulse distribution circuit 3,
wherein a predetermined interpolating operation is effected
to supply distribution pulses xp, yp and zp to the servo units
4X, 4Y and 4Z of the respective axes, driving the servomotors
5X, 5Y and 5Z.

The distribution pulses zp which are applied to the
Z-axis servo unit 4Z are integrated by the counter 7 to detect
the current position of the Z-axis motor 5Z.  The comparator 9
compares the content of the current value counter 7 and the
content of the clamp  coordinate value register 8 to detect the
period for which the position of the Z-axis motor 5Z exceeds a
clamp coordinate value set in the register 8, and turns OFF the
gate circuit 10 for that period, inhibiting the input of the
distribution pulses to the Z-axis servomotor. Accordingly, for
instance, in the case where a clamp value indicated by a broken
line $CL_1$ in Fig. 2 is set in the clamp coordinate value register
8, the distribution pulses zp are not supplied to the Z-axis

- 4 -

servo unit 4Z below the set clamp coordinate value, so that although the finishing command data are being processed in the pulse distribution circuit 3, the actual movement of the servomotor is along the machining route $A \rightarrow B_1 \rightarrow C_1 \rightarrow D \rightarrow E \rightarrow A$ in Fig. 2. That is, rough machining takes place.

The clamp data generator 9 is to sequentially modify the clamp coordinate value of the register 8 and a command, such as the rate at which the coordinate value is changed, is provided from the command tape 1 or the keyboard 11. Accordingly, for example, in the case of executing the finishing command data while changing the clamp value in the order $CL_1$ to $CL_7$ in Fig. 2, it is possible to perform rough machining with the clamp value modified sequentially in the order $CL_1$ to $CL_7$. While in the above embodiment the Z-axis is clamped, it is also possible, of course, to carry out rough machining, clamping other axes, such as the X-axis and the Y-axis.

Fig. 4 is a block diagram illustrating the principal part of another example of the numerical controller embodying the present invention system, the same reference numerals being used as those in connection with Fig. 1, where the parts are the same. Reference numeral 30 indicates a clamp cutting control circuit. According to the method of the foregoing embodiment, when a predesignated shaft exceeds a clamp coordinate value during execution of the finishing command data, the supply of the distribution pulses to the shaft is stopped to thereby

- 5 -

permit the clamp operation.  In contrast thereto, according to the method of this embodiemnt, the finishing command data is subjected to arithmetic processing in the clamp cutting control circuit 30 to obtain rough machining command blocks, which are provided to the pulse distribution circuit 3, thereby allowing the clamp operation at the clamp coordinate value designated by the register 6.

That is to say, the finishing command data stored on the command tape 1 is composed of, for instance, five command blocks $\overparen{P_1P_2}$, $\overparen{P_2P_3}$, $\overparen{P_3P_4}$, $\overparen{P_4P_5}$ and $\overparen{P_5P_6}$ as indicated by the sclid line in Fig. 4.  In the case where the clamp coordinate value is set at a position Dn, the clamp cutting control circuit 30 reads out the command blocks in a sequential order and decides the positional relationship of start and end points Zst and Zend of each command block to the clamp coordinate value Dn.  And when the start and the end point both lie above the clamp coordinate value Dn(corresponding to the command blocks $\overparen{P_1P_2}$ and $\overparen{P_5P_6}$), the clamp cutting control circuit produces a move command from the start point to the end point, and when the start point is above the clamp coordinate value Dn but the end point is under it (corresponding to the command block $\overparen{P_2P_3}$), the clamp cutting control circuit calculates the intersection of a commanded figure with Z = Dn and produce a move command from the start point to the intersection.  When the start point is under the clamp coordinate value Dn but the end point is above it (corresponding to the command block $\overset{\frown}{P_4P_5}$), the intersection of the commanded figure with Z = Dn is calculated and a move command from a current point (corresponding to a point $P_2P_3$) to the intersection and a move command from the intersection to the end point are both produced; and when the start and the end point both lie under the clamp coordinate value Dn, this command block is invalidated. Fig. 5 is a flowchart representation of the abovesaid arithmetic processing operation of the clamp cutting control circuit 30 so as to facilitate a better understanding of the operation. Such processing is implemented using the arithmetic operation function of a processor in practice.

According to such a system of this embodiment, the finishing command data is subjected to arithmetic processing by the clamp cutting control circuit 30 to produce rough machining command data for input to the pulse distribution circuit 3, so that this method has the advantage of higher cutting efficiency than in the case of the method of the foregoing embodiment. Furthermore, if all command blocks necessary for one rough machining are prestored in a memory or the like, the memory capacity increases, so that it is preferred to calculate the rough machining blocks on-line with cutting control, thereby to minimize the number of rough machining command blocks which are stored.

As has been described in the foregoing, according to the present invention, since rough machining can be carried

- 7 -

out using finishing command data, there is no need of preparing several kinds of rough machining command data in advance unlike in the prior art, providing the advantage of markedly improved maneuverability of the numerical controller.

Incidentally, the present invention is not limited specifically to the foregoing embodiments but various other modifications and additions can be effected. For example, it is optional to control the feed rate of a tool by storing the tool feed rate in a predetermined section in each rough machning, or by manually entering it from the keyboard.

- 8 -

CLAIMS

1. A numerical-controlled machining system, characterized by the provision of clamp means for clamping a predesignated drive shaft at a clamp coordinate value when the drive shaft is to exceed the clamp coordinate value in the case of executing finishing command data stored on a numerical information storage medium, and clamp coordinate value modifying means capable of modifying the clamp coordinate value in order, whereby rough machining takes place using the finishing command data.

2. A numerical-controlled machining system according to claim 1, characterized in that the clamp means is provided with a current value counter indicating a current value of the pre-designated drive shaft, a clamp coordinate value register for setting the clamp coordinate value from the clamp coordinate value modifying means, a comparator for comparing the content of the clamp coordinate value register and the content of the current value counter, and a gate circuit for controlling distribution pulses from a pluse distribution circuit to the predesignated drive shaft through using the output from the comparator as a gate signal.

3. A numerical-controlled machining system according to claim 1, characterized in that the clamp means is provided with a clamp cutting control circuit for subjecting the finishing command data to arithmetic processing to prepare rough machining command blocks and applying the prepared command blocks to a pulse distribution circuit.

1/3

FIG. 1

FIG. 2

FIG. 3

FIG. 4

**0067879**

**FIG. 5**

START

READ OUT COMMAND TAPE

CALCULATE TERMINATING POINT

$Z$ end $< D$ n — NO

YES

$Z$ st $> D$ n — NO

YES

$Z$ st $> D$ n — NO

YES

CALCULATE INTERSECTION OF Z=Dn AND COMMAND FIGURE

CALCULATE INTERSECTION OF Z=Dn AND COMMAND FIGURE

GENERATE MOVE COMMAND FROM STARTING POINT TO TERMINATING POINT

GENERATE MOVE COMMAND FROM STARTING POINT TO TERMINATING POINT

GENERATE BOTH MOVE COMMAND FROM CURRENT VALUE TO INTERSECTION AND MOVE COMMAND FROM INTERSECTION TO TERMINATING POINT

GENERATE DATA OF USE OF PULSE DISTRIBUTION

END

# INTERNATIONAL SEARCH REPORT

**0067879**

International Application No **PCT/JP81/00380**

## I. CLASSIFICATION OF SUBJECT MATTER (if several classification symbols apply, indicate all) [3]

According to International Patent Classification (IPC) or to both National Classification and IPC

Int. Cl.[3] G05B19/403

## II. FIELDS SEARCHED

**Minimum Documentation Searched [4]**

| Classification System | Classification Symbols |
|---|---|
| I P C | G05B 15/00, G05B 19/00, B23Q 15/00 - 15/28 |

**Documentation Searched other than Minimum Documentation
to the Extent that such Documents are Included in the Fields Searched [5]**

| | |
|---|---|
| Jitsuyo Shinan Koho | 1926 - 1981 |
| Kokai Jitsuyo Shinan Koho | 1971 - 1981 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP,A, 50-35588 (The Bendix Corporation) 4, April, 1975 (04.04.75), Page 2, lower right column, line 13 to page 3, upper left column, line 1 & US, A, 3854353 & DE, A, 2429586 | 1 - 3 |
| Y | JP,B1, 51-15186 (Fujitsu Limited et al.), 14, May, 1976 (14.05.76), Column 2, lines 2 to 4 | 1 - 3 |

"Y" document of particular relevance; the claimed invention cannot be considered to involve an inventive step when the document is combined with one or more other such documents, such combination being obvious to a person skilled in the art.

"&" document member of the same patent family

* Special categories of cited documents: [15]

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

## IV. CERTIFICATION

| Date of the Actual Completion of the International Search [3] | Date of Mailing of this International Search Report [3] |
|---|---|
| January 5, 1982 (05.01.82) | January 18, 1982 (18.01.82) |

| International Searching Authority [1] | Signature of Authorized Officer [20] |
|---|---|
| Japanese Patent Office | |